# EUROPÄISCHE PATENTSCHRIFT

(11) **EP 0 412 324 B1**
(45) Veröffentlichungstag und Bekanntmachung des Hinweises auf die Patenterteilung: **22.06.1994**
(21) Anmeldenummer: 90113650.7
(22) Anmeldetag: 17.07.1990
(51) Int. Cl.: D06M 15/227, D06M 15/643, C09D 123/30, C09D 183/04

(54) **Zusammensetzung in Form einer wässrigen Dispersion und Verfahren zur Behandlung von Fasermaterialien**
Aqueous dispersion composition and process of treatment of fibrous materials
Composition d'une dispersion aqueuse et procédé pour le traitement de matières fibreuses

(30) Priorität: 05.08.1989 DE 3926005; 07.03.1990 DE 4007136
(43) Veröffentlichungstag der Anmeldung: 13.02.1991
(73) Patentinhaber: Pfersee Chemie GmbH, 86460 Langweid a. Lech (DE)
(72) Erfinder: Kästele, Xaver, D-8902 Neusäss (DE); Chrobaczek, Harald, Dr., D-8900 Augsburg (DE); Tschida, Günther, D-8930 Schwabmünchen (DE); Schlichting, Ingeborg, D-8939 Ettringen (DE)

(56) Entgegenhaltungen:
- EP-A- 0 220 400
- EP-A- 0 342 834
- GB-A- 1 198 615
- US-A- 3 853 607
- TEXTILE CHEMIST AND COLORIST. Bd. 18, Nr. 3, März 1986, NORT CAROLINA US Seiten34 - 37; MOLLY M. JOYNER: 'Aminofunctional Polysiloxanes: A New Class ofSofteners'

## Beschreibung

Die vorliegende Erfindung betrifft eine Zusammensetzung in Form einer wäßrigen Dispersion, die Polyethylenwachs mit bestimmten Kenndaten, Polyorganosiloxane mit stickstoffhaltigen Gruppen, die zumindest teilweise in bestimmter Art modifiziert sind, und gegebenenfalls bekannte Weichmachungsmittel in dispergierter oder gelöster Form enthalt. Außerdem wird ein Verfahren zur weichmachenden Behandlung von Fasermaterialien unter Verwendung solcher Zusammensetzungen beansprucht.

Es ist seit langem bekannt, mit wäßrigen Dispersionen anoxidierter Polyethylene ("Polyethylenwachse") die technologischen Eigenschaften, wie z.B. die Reißfestigkeit und den Glanz von Geweben zu verbessern (vgl. z.B. DE-B 16 19 065). Desgleichen sind aminoalkylgruppenhaltige Polyorganosiloxane bekannt, die unter anderem auch zur Behandlung von Textilen dienen, welchen sie einen sehr angenehmen, weichen Griff, den "Silikongriff verleihen (vgl. z.B. GB-A 2 036 052 und DE-A 3 723 697).

Versucht man nun, derartige Polyethylendispersionen mit Dispersionen von Aminoalkylgruppenenthaltenden Polyorganosiloxanen in einem Produkt zu vereinen, um bei der Behandlung von Fasermaterialien die diesen beiden Produktklassen innewohnenden wertvollen Eigenschaften ausnützen zu können, so ergeben sich hier unerwartete, erhebliche Schwierigkeiten.

Die Vereinigung derartiger Dispersionen führt häufig zu Instabilitäten, die bis zu einer Verpastung der Dispersion führen. Oft verfärben sich auch - insbesondere bei erhöhten Temperaturen - derartige Dispersionen, sie werden gelb bis bräunlich. Damit ist ihre Anwendung auf Textilien beeinträchtigt oder doch zumindest eingeschränkt. Schließlich ist auch noch anzumerken, daß sich bei der Anwendung der Dispersionen nach dem Stand der Technik zur Behandlung der Fasermaterialien, vor allem von Textilien im Foulardverfahren, insbesondere bei der Kombination mit anderen in der Textilindustrie üblichen Hilfsmitteln - hier sind vor allem Zellulosevernetzer zu nennen - sehr leicht Walzenbelag bildet, der zu kaum wieder entfernbaren Flecken auf dem Fasermaterial führt.

Die Erfinder haben sich die Aufgabe gestellt, diese Schwierigkeiten zu überwinden.

Überraschenderweise wurde nun gefunden, daß die geschilderten Nachteile mit den spezifischen Zusammensetzungen, wie sie im Patentanspruch 1 beschrieben werden, nicht auftreten. In den Unteransprüchen 2 bis 11 werden bevorzugte Ausführungsformen beansprucht. Außerdem wird in den Ansprüchen 12 bis 16 ein Verfahren zur weichmachenden Behandlung von Fasermaterialien beansprucht.

Das in dem Bestandteil (1) enthaltene emulgierbare Polyethylen (Polyethylenwachs) ist bekannt und im Stand der Technik (vgl. z.B. DE-C 2 359 966, DE-A 2 824 716 und DE-A 1 925 993) ausführlich beschrieben. In aller Regel handelt es sich bei dem emulgierbaren Polyethylen um ein solches mit funktionellen Gruppen, insbesondere COOH-Gruppen, die teilweise verestert sein können. Diese funktionellen Gruppen werden durch Oxidation des Polyethylens eingeführt. Es ist aber auch möglich, durch Copolymerisation von Ethylen mit z.B. Acrylsäure die Funktionalität zu erhalten. Die im Bestandteil (1) enthaltenen emulgierbaren Polyethylene weisen bei 20°C eine Dichte von mindestens 0,91 g/cm³, eine Säurezahl von mindestens 5 und eine Verseifungszahl von mindestens 10 auf. Besonders bevorzugt sind erfindungsgemäße Zusammensetzungen (Ausrüstungsmittel) mit solchen emulgierbaren Polyethylenen, die eine Dichte bei 20°C von 0,95 bis 1,05 g/cm³, eine Säurezahl von 10 bis 60 und eine Verseifungszahl von 15 bis 80 besitzen. Im Handel ist dieses Material im allgemeinen in Form von Schuppen, Pastillen und ähnlichem zu haben. Der Bestandteil (1), also die Dispersion des emulgierbaren Polyethylens, wird in der erfindungsgemäßen Zusammensetzung vorzugsweise in Mengen von 5 bis 95, insbesondere 55 bis 90 Gew.%, bezogen auf die Zusammensetzung, in Form einer Dispersion, welche 20 bis 35 Gew.% Polyethylenwachs enthält, eingesetzt. Die Mengen von 5 bis 95 bzw. 55 bis 90 Gew.% beziehen sich auf die Menge an dieser Dispersion in der Gesamtzusammensetzung.

Das Polyethylenwachs wird in Form von Dispersionen eingesetzt. Zu deren Herstellung sind unterschiedliche Emulgatoren geeignet. Diese Emulgatoren können den Weichgriffeffekt der Zusammensetzungen bei deren Anwendung unterstützen. Die Herstellung der Dispersionen ist im Stand der Technik ausführlich beschrieben. Bevorzugt werden nichtionogene Emulgatoren, insbesondere ethoxylierte Alkylphenole und Ethoxylate von verzweigtkettigen Alkoholen, wobei diese in der Regel in Mengen von 20 bis 35 Gew.%, bezogen auf das zu emulgierende Polyethylenwachs, eingesetzt werden. Als besonders geeignet haben sich Alkylphenol- und die genannten Alkohol-Ethoxylate mit ca. 5 bis 25 angelagerten Ethylenoxid-Einheiten erwiesen.

Bei dem Bestandteil (2) der erfindungsgemäßen Zusammensetzungen handelt es sich um ausgewählte Polyorganosiloxane in dispergierter Form. Die Polyorganosiloxane enthalten Stickstoff-enthaltende Gruppen, wobei jede Gruppe mindestens ein, vorzugsweise aber zwei Stickstoffatome enthält. Die Polyorganosiloxane enthalten dabei mindestens 2 derartige Gruppen, die über Kohlenwasserstoffreste an das Silicium gebunden sind. Die Stickstoff-enthaltenden Gruppen entsprechen bevorzugt der Formel 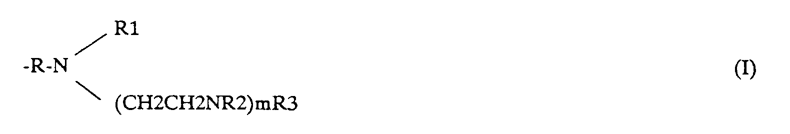
worin m = 0 oder 1 ist, R einen zweiwertigen Kohlenwasserstoffrest mit 2 bis 10 Kohlenstoffatomen, der auch durch eine Sauerstoffbrücke unterbrochen sein kann, bevorzugt einen Kohlenwasserstoffrest mit 3 oder 4 Kohlenstoffatomen bedeutet und worin R1 gleich Wasserstoff, ein Alkylrest mit 1 bis 4 Kohlenstoffatomen oder der Rest -COR4, R2 gleich Wasserstoff, ein Alkylrest mit 1 bis 4 Kohlenstoffatomen oder der Rest -COR4, R3 gleich Wasserstoff oder ein Alkylrest mit 1 bis 4 Kohlenstoffatomen und R4 ein, ggfs. substituierter, Alkylrest mit 1 bis 4 Kohlenstoffatomen ist, mit der Maßgabe, daß R1 und R2 in der Summe im Durchschnitt zumindest zu 25 %, bevorzugt zu 50 bis 100% den Rest -COR4 bedeuten, wobei die von R1 und R2 zu 100 % fehlenden Anteile, unabhängig voneinander, Wasserstoff oder einen Alkylrest mit 1 bis 4 Kohlenstoffatomen bedeuten.

Wie aus dieser Formel und deren Erläuterungen hervorgeht, ist es erfindungswesentlich, daß der Stickstoff in den Stickstoff enthaltenden Gruppen zumindest zu 25 %, bevorzugt zu 50 bis 100 % in Form von Amidogruppen vorliegt. Besonders bevorzugt sind solche Polyorganosiloxane, in denen in der oben angegebenen Formel m = 1 ist.

Der Durchschnittswert von mindestens 25 % Resten der Formel -COR4 nach obiger Formel (oder entsprechend höhere Durchschnittswerte) kann auch dadurch erreicht werden, daß Polyorganosiloxane mit Stickstoff enthaltenden Gruppen, in denen der Stickstoff ausschließlich in Form von primären und ggfs. sekundären Aminogruppen vorliegt, mit einem Polyorganosiloxan mit einem entsprechend höheren Anteil an Amidogruppen vermischt werden. In diesem Sinne ist das "im Durchschnitt" zu verstehen. Die Stellung der Stickstoff-enthaltenden Gruppen kann sowohl endständig als auch seitenständig sein. Aus den obigen Ausführungen geht hervor, daß die Stickstoff-Atome in den Stickstoff-enthaltenden Gruppen in Form primärer oder sekundärer Aminogruppen und in Form von Amidogruppen (-NHCO-) vorliegen.

Besonders bevorzugte erfindungsgemäße Zusammensetzungen sind solche, in denen, wie in den Patentansprüchen 5 und 6 aufgeführt, Polydialkylsiloxane enthalten sind, deren Stickstoff-enthaltende Gruppen der obigen Formel (I) entsprechen und in denen zumindest ein Teil der - oben definierten - Reste R 4 eine Hydroxylgruppe als Substituenten aufweist. Vorzugsweise stellt in diesen Polysiloxanen mindestens ein Teil der Reste R 4 eine lineare Alkylgruppe mit end-(ω) ständiger Hydroxylgruppe dar. Geeignete Polysiloxane mit durch eine Hydroxylgruppe substituierten Resten R 4 sowie deren Herstellung sind in der EP-A 0 342 830 und in der EP-A 0 342 834 beschrieben.

Die Verwendung dieser bevorzugten, Hydroxylgruppen enthaltenden Polysiloxane in den erfindungsgemäßen Zusammensetzungen bringt besondere Vorteile bezüglich weichem Griff der ausgerüsteten Ware mit sich.

Eine gewisse Rolle spielt auch der Polymerisationsgrad der Polysiloxane. Im Rahmen des erfindungsgemäßen Verfahrens zur weichmachenden Behandlung von Fasermaterial sind Zusammensetzungen (bzw. deren Bestandteile (2)) brauchbar, in denen die zugrundeliegenden Organopolysiloxane bei 20°C eine Viskosität bis zu 100.000 mPa.s, insbesondere 100 bis 20.000 mPa.s, ganz besonders bevorzugt von 100 bis 5.000 mPa.s aufweisen, da hiermit besonders günstige Effekte erzielt werden. Nicht brauchbar sind Organopolysiloxane mit einer Viskosität über 100.000 mPa.s, da diese bei der Anwendung im Foulardverfähren hinsichtlich Walzenbelag zu Schwierigkeiten führen.

Neben den zwangsweise vorhandenen, oben näher erläuterten Gruppen und den Angaben zur Viskosität bestehen hinsichtlich der verwendbaren Polysiloxane keine besonderen Einschränkungen. So können gerad- und verzweigtkettige Polysiloxane, insbesondere Polydimethylsiloxane mit Stickstoff enthaltenden Gruppen, die auch endständige OH-Gruppen, seitenständige Kohlenwasserstoff- oder substituierte Kohlenwasserstoffreste, wie Vinyl- und Phenylreste oder auch geringe Mengen an Silicium gebundenen Wasserstoff enthalten, eingesetzt werden und der Fachmann wird keinerlei Mühe haben, die richtigen Ausgangssubstanzen auszuwählen.

Die Herstellung der als Bestandteil(2) eingesetzten Dispersionen ist bekannt. Auch hier wird der Fachmann keine Mühe haben, das für das jeweilige Organopolysiloxan geeignete Verfahren mit den dazu geläufigen Emulgatoren auszuwählen. Hierzu sei beispielsweise auf die GB-B 1.579.983, EP-A 138 192 und DE-A 3 723 697 verwiesen. Es können also grundsätzlich alle nach bekannten Verfahren hergestellten Dispersionen (2) eingesetzt werden, wobei die sogenannten Mikroemulsionen besonders geeignet sind. Als Emulgatoren werden generell nichtionogene bevorzugt. Besonders bewährt haben sich Sekundäralkoholethoxylate und Ethoxylate von verzweigtkettigen Alkoholen sowie Alkslphenolethoxylate mit in der Regel 3 bis 15, insbesondere 5 bis 10 Ethylenoxideinheiten je Alkohol- bzw. Phenolrest. Die Emulgatoren werden in der Regel in Mengen von 10 bis 80 Gew.%, bezogen auf das zu emulgierende Siloxan, eingesetzt.

Polyorganosiloxane der angegebenen Art sind im Handel erhältlich und werden beispielsweise von der Firma Dow Corning Corp. unter der Bezeichnung X2-8088 und Q2-8357 vertrieben.

Die Konzentration der Dispersionen (Bestandteil 2) bewegt sich in üblichem Rahmen, wobei 10 bis 40 %ige Dispersionen am häufigsten zur Anwendung kommen.

Diese Dispersionen (Bestandteil 2) werden in den erfindungsgmäßen Zusammensetzungen bevorzugt in Mengen von 5 bis 95, insbesondere 10 bis 45 Gew.% (in Form einer Dispersion, welche 10 bis 20 Gew.% Polysiloxan enthält), verwendet. Diese Werte von 5 bis 95 bzw. 10 bis 45 Gew.% beziehen sich auf den Gehalt einer solchen Dispersion in den erfindungsgemäßen Zusammensetzungen.

Gegebenenfalls können die erfindungsgemäßen Zusammensetzungen als Bestandteil (3) bekannte Weichmachungsmittel in dispergierter oder gelöster Form enthalten.

Als solche bekannte Weichmachungsmittel sind grundsätzlich alle bekannten derartigen Stoffe, soweit die Verträglichkeit mit den Bestandteilen (1)und (2) gegeben ist, geeignet. Als bevorzugte Beispiele seien hydrophilisierend wirkende Silikone genannt. Im allgemeinen handelt es sich um Polydimethylsiloxane, die Polyethoxi-/bzw. Polypropoxi- bzw. Polyethoxi-/-propoxigruppen eingebaut enthalten.

Weitere bekannte Bestandteile (3) sind Paraffinemulsionen oder die aus der DE-C 2 318 906 bekannten Kondensationsprodukte.

Die Bestandteile (3) sind in den erfindungsgemäßen Zusammensetzungen m Mengen von 0 bis 30, insbesondere 0 bis 15 Gew.%, enthalten. Diese Werte beziehen sich auf den Gehalt an einer Dispersion oder Lösung, welche 20 bis 30 Gew.% Weichmachungsmittel enthält.

Die Herstellung der erfindungsgemäßen Zusammensetzung gelingt in einfacher Weise durch Vermischen der Bestandteile, vorteilhaft bei normaler bis leicht erhöhter Temperatur. Dabei stellt sich ein pH-Wert von etwa 7 bis 9 ein.

Weiterhin gehört zum Gegenstand der vorliegenden Erfindung ein Verfahren zur weichmachenden Behandlung von Fasermaterialien, insbesondere von Textilmaterial. Es ist dabei ohne weiteres möglich, aus den Bestandteilen (1), (2) und gegebenenfalls (3) in bekannter Weise Ausrüstungsflotten zu bereiten, das Material damit zu behandeln und in bekannter Weise durch Trocknen und gegebenenfalls Erhitzen bzw. Kondensieren fertigzustellen. Besonders bevorzugt wird dabei das erfindungsgemäße Ausrüstungsverfahren in wäßriger Flotte ausgeführt, wobei die erfindungsgemäßen Zusammensetzungen zum Einsatz kommen.

Die Faser-, insbesondere Textilbehandlung erfolgt mit solchen Mengen der Bestandteile (1), (2) und gegebenenfalls (3) bzw. der erfindungsgemäßen Zusammensetzungen, daß auf dem behandelten Material eine Auflage von etwa 0,2 bis 3 Gew.% Aktivsubstanz (Polyethylenwachs/Organopolysiloxan mit Stickstoff-enthaltenden Gruppen und ggfs. Aktivsubstanz des Bestandteiles (3)) resultiert. Dazu werden die Materialien in Form von Flotten, die 15 bis 80, insbesondere 20 bis 60 g/l der Zusammensetzungen bzw. entsprechende Mengen der genannten Bestandteile enthalten, eingesetzt, z.B, im Foulardverfahren. Beim ebenfalls anwendbaren Ausziehverfahren sind entsprechende Mengen heranzuiehen. Selbstverständlich können auch alle anderen bekannten Verfahren zum Einsatz kommen.

Grundsätzlich ist es ohne weiteres auch möglich, die weichmachende Faserbehandlung mit anderen bekannten Ausrüstungsverfahren zu kombinieren. Sollen z.B. Textilmaterialien erfindungsgemäß behandelt werden, so seien als Beispiele für verwendbare bekannte Ausrüstungsmittel Appretur- und Schiebefestmittel, Antistatika und Zellulosevernetzer sowie gegebenenfalls die zur Aushärtung notwendigen Katalysatoren genannt. Die Mengen der dabei mitverwendeten üblichen Textilhilfsmittel sind dem Fachmann bekannt.

Unter Fasermaterialien sind Papier, Leder, insbesondere aber Textilien zu verstehen, die in Form von Geweben, Gewirken oder auch Vliesen vorliegen können. Sie können dabei aus natürlichen (z.B. Baumwoll-, Wollfasern) oder synthetischen Fasern (z.B. Polyester-, Polyamid-, Polyacrylnitrilfasern) bestehen, wobei die Textilien selbstverständlich auch aus allen bekannten Fasermischungen aufgebaut sein können.

Mit dem erfindungsgemäßen Gegenstand gelingt es erstmals, Polyethylendispersionen und Polysiloxane mit Stickstoff-enthaltenden Gruppen in Dispersionsform zu kombinieren, wobei gleichzeitig - und das ist besonders überraschend -
- gegen Verfärbung - auch bei höherer Temperatur während längerer Zeit - weitgehend beständige Produkte entstehen, die
- bei der Lagerung auch keine Verpastung zeigen und
- mechanisch stabile Flotten auch in Gegenwart von Zellulosevernetzern liefern, wobei
- keine Walzenbeläge bei der üblichen Foulardmethode entstehen, selbst dann nicht, wenn sie zusammen mit Zellulosevernetzern angewandt werden.

Die Fachwelt hat in der Vergangenheit erhebliche Anstrengungen unternommen, um dieses vielschichtige Problem in den Griff zu bekommen. Aber erst mit dem Gegenstand der Erfindung ist die Lösung desselben gelungen, wobei die überragende Rolle den in dem Bestandteil (2) verwendeten modifizierten Polyorganosiloxanen zukommt.

Die vorliegende Erfindung wird nun anhand der nachfolgenden Beispiele naher erläutert, wobei Prozentangaben = Gewichtsprozent bedeuten.

### Beispiel 1 (erfindungsgemäß)

### Herstellung einer erfindungsgemäßen Dispersion A 1

150 g des Handelsproduktes "Q2-8357" (Hersteller: Firma Dow Corning Corp.) werden in 850 g einer wäßrigen, 3,3 g 60 %ige Essigsäure enthaltenden Lösung von 30 g eines sekundären C11 - 15 Alkoholethoxilats (durchschnittlich 5 Ethoxigruppen) und 70 g eines sekundären C11 - 15 Alkoholethoxilats (mit durchschnittlich 7 Ethoxigruppen) entsprechend den Angaben der DE-A 3 723 697 emulgiert.

Außerdem wird eine Polyethylenwachsdispersion in bekannter Weise durch Erhitzen der Bestandteile auf ca. 110°C bei leichtem Überdruck unter Verwendung der folgenden Bestandteile hergestellt: 281 g eines Polyethylenwachses (Säurezahl 20 bis 30, Verseifungszahl 30 bis 50, Dichte bei 20°C ca. 0,96 g/cm³) und 719 g einer 4,5 g KOH enthaltenden wäßrigen Lösung von 63 g eines Isotridecylethoxylates mit durchschnittlich 20 Ethoxigruppen.

Eine Dispersion A 1 wird nun durch Mischen von 3 Teilen der Polysiloxanemulsion mit 7 Teilen der Polyethylenwachsdispersion hergestellt, wobei sich eine weiße, feinteilige Dispersion mit einem pH-Wert von 7,6, einer Trübungszahl von 9 (gemessen mit dem Durchlichttrübungsmesser der Firma Dr. Lange bei einer Verdünnung von 1 g/l) und einer Viskosität von 25 mPa.s, die während einer mindestens 7-tägigen Lagerung bei 60°C konstant bleibt, bildet.

### Beispiel 2 (erfindungsgemäß)

### Herstellung einer erfindungsgemäßen Dispersion A 2

Beispiel 1 wurde mit den Abänderungen a) und b) wiederholt:
a) es wurde ein anderes Polysiloxan verwendet, das folgende Daten besaß:
   Die Stickstoff enthaltenden Seitengruppen des verwendeten Siloxans wiesen je 2 Stickstoffatome auf. Etwa 25 % aller Seitengruppen enthielten eine sekundäre Aminogruppe in der Kette und eine primäre Aminogruppe am Ende der Kette. Etwa 75 % der Seitenketten enthielten ebenfalls eine sekundäre Aminogruppe in der Kette, eine Amidogruppe in der Kette und eine endständige Hydroxylgruppe. Sie besäßen eine Struktur gemäß Anspruch 6. Das verwendete Siloxan besäß eine Viskosität in der Größenordnung von 1000 mPa.s.
b) es wurden 4 Teile Polysiloxanemulsion mit 6 Teilen der Polyethylenwachsdispersion gemischt; es ergab sich eine Dispersion A 2, die sich in folgenden Daten von der Dispersion A 1 unterschied:
   Trübungszahl 21
   Viskosität 10 mPa.s.

### Beispiel 3 (Vergleichsbeispiel)

### Herstellung einer Vergleichsdispersion B

66 Teile einer Polyethylenwachsdispersion, die durch Emulgierung von 280 g Polyethylenwachs (Daten siehe Dispersion A 1) in 720 g einer 4 g KOH enthaltenden wäßrigen Lösung und 45 g eines Nonylphenolethoxilates mit durchschnittlich 9 Ethoxigruppen und 28 g eines Fettalkoholpolyglykolethers mit durchschnittlich 7 Ethoxigruppen bei 110°C in gleicher Weise erhalten wurde, werden mit 34 Teilen einer Silikonemulsion, die durch Emulgierung von 250 g eines ausschließlich Aminoethylaminopropylgruppen als stickstoffhaltige Gruppen enthaltenden Polydimethylsiloxans (Viskosität 350 mPa.s, Stickstoffgehalt 0,7 %) in 750 g einer wässrigen, 30 g Propylenglykol enthaltenden Lösung von 30 g eines Emulgatorgemisches aus C 10 bis 12 Alkoholethoxylats mit durchschnittlich 6 Ethoxidgruppen erhalten wurde, gemischt. Es wird eine leicht gelbliche Dispersion erhalten.

### Überprüfung der Lagerstabilität

Werden die Dispersionen A 1, A 2 und B längere Zeit bzw. bei erhöhter Temperatur gelagert, so tritt eine unterschiedliche Verfärbung ein. Während die erfindungsgemäßen Dispersionen A 1 und A 2 bei der Lagerung nur eine geringe Farbvertiefung erleiden, zeigt die Dispersion B) nach dem Stand der Technik hier deutliche Nachteile. Einzelheiten können der nachfolgenden Tabelle entnommen werden:

| Dispersion | Farbe der Dispersion | | | |
|---|---|---|---|---|
| | Original | nach 1 Monat bei Raumtemp. | nach 1 Tag bei 60° C | nach 1 Woche bei 60° C |
| A 1), A 2) (erfindungsgemäß) | weiß | leicht gelblich | leicht gelblich | gelblich |
| B) Stand der Techn. (Vergleich) | leicht gelblich | gelbbraun | gelblich bis gelb | stark gelbbraun |

### Überprüfung der mechanischen Stabilität

Zur Überprüfung der mechanischen Stabilität (Schüttelstabilität und Walzenbelag) werden mit den wie oben beschrieben hergestellten Dispersionen wäßrige Flotten hergestellt, die neben 35 g/l der Dispersionen A 1, A 2 bzw. B noch
55 g/l eines ca. 75 %igen Zellulosevernetzers (mit Methanol veretherter Dimethyloldihydroxyethylenharnstoff),
16,5 g/l Magnesiumchloridhexahydrat und
0,2 g/l Natriumfluoroborat
enthalten.

Diese Flotten werden nun wie folgt getestet:
a) Schüttelstabilität
   Dazu werden 300 ml dieser Flotten in eine 500 ml Weithalsflasche zusammen mit 20 x 35 cm großen Stoffstücken (Baumwollinlet mit 130 g/m2) 1 Stunde bei 250 Schwingungen pro Minute (Amplitude 1,9 cm) geschüttelt. Anschließend werden die Stoffmuster abgequetscht und 10 Minuten bei 110°C getrocknet.
b) Walzenbelag
   Dazu werden die Flotten auf einer kontinuierlich laufenden Foulardanlage eingesetzt (Laufzeit 1 Stunde). Das Prüfgewebe ist Baumwollköper (240 g/m2).

Nach dem Test werden die Flotten, die Foulardwalzen und die Gewebemuster begutachtet und dabei folgendes Ergebnis erhalten:

| | Schüttelprobe | | | Walzenbelag | | |
|---|---|---|---|---|---|---|
| Dispersion | Flotte | Foulardwalze | Gewebe | Flotte | Foulardwalze | Gewebe |
| A 1), A 2) (erfind.gem.) | keine fällungen | Aus- kein Rückstand | keine Flecken | unverändert | keine Ablagerungen | keine Flecken |
| B) (Stand der Technik) | starke Ausfällungen | deutliche Rückstände | deutliche Flecken | deutliche Ausfällungen | starke Ablagerungen | starke Fleckenbildung |

Die Überlegenheit der Erfindung wird durch diese Gegenüberstellung deutlich.

### Ausrüstung

Mit den wie oben beschrieben hergestellten Flotten wird ein Baumwollpopelin (ca. 120 g/m2) foulardiert (Flottenaufnahme ca. 72 %) und nach dem Trocknen (10 Minuten bei 100° C) noch kurzfristig bei 140° C kondensiert.

Die Gewebe zeigen neben einer guten Knitterfestigkeit einen sehr weichen, angenehm fließenden Griff. Es ist dabei zwischen den einzelnen Flotten keine Differenzierung des Griffverhaltens möglich. Im Weißgradverhalten aber zeigt das unter Verwendung der Dispersion B behandelte Gewebe gegenüber den anderen beiden Geweben (Behandlung mit Dispersion A 1 bzw. A 2) eine deutlich erkennbare Vergilbung.

### Beispiel 4 (Vergleichsbeispiel)

### Herstellung einer Vergleichsdispersion C

Es wurde eine Dispersion C hergestellt unter Verwendung der gleichen Polyethylenwachsdispersion, wie sie zur Herstellung der erfindungsgemäßen Dispersionen A 1 und A 2 eingesetzt worden war. Diese Polyethylenwachsdispersion wurde mit der gleichen Silikonemulsion wie im Fall der Herstellung der Vergleichsdispersion B gemischt; das Mischungsverhältnis war das gleiche wie im Fall der Vergleichsdispersion B. Es wurden folgende Ergebnisse erhalten:

| Lagerstabilität | Dispersion A 2 (erfindungsgemäß) | C (Vergleich) |
|---|---|---|
| Original | weiß | weiß |
| Nach 1 Monat bei Raumtemperatur | leicht gelblich | stark gelb |
| nach 1 Tag 60°C | leicht gelblich | gelb |
| nach 1 Woche 60°C | gelblich | stark gelbbraun |

| Schüttelstabilität | | |
|---|---|---|
| Flotte | keine Ausfällungen | Ausfällungen |
| Foulardwalze | kein Rückstand | kein Rückstand |
| Gewebe | keine Flecken | deutliche Flecken |

| Walzenbelag | | |
|---|---|---|
| Flotte | unverändert | unverändert |
| Foulardwalze | keine Ablagerungen | starke Ablagerungen |
| Gewebe | keine Flecken | geringe Fleckenbildung |

Im Weißgrad-Verhalten bei Anwendung hoher Temperaturen (bis 190 °C) von ausgerüsteter Baumwoll-Maschenware zeigt C deutlich schiechteren Ausfall (ca. 15 - 35 Punkte nach Ganz; vgl. hierzu "Methoden und Einsatzmöglichkeiten der farbmetrischen Weißbewertung von Textilien" von R. Griesser, Ciba-Geigy Broschüre Nr. 9140 d, Ausgabe 1981; siehe auch "Textilveredlung" 18 (1983), Nr. 5, Seiten 157 - 162).

In einem weiteren Versuch wurden eine Dispersion analog erfindungsgemäßer Dispersion A 2 und eine Vergleichsdispersion analog C hergestellt, welche die gleichen Produkte enthielten wie die beschriebenen Dispersionen A 2 und C, aber in solchen Mengen, daß der Silikongehalt dieser beiden Dispersionen gleich war. Die Ergebnisse, welche mit diesen beiden Dispersionen erhalten wurden, waren die gleichen wie sie aus der obigen Gegenüberstellung (A 2 - C) hervorgehen.

## Patentansprüche

1. Zusammensetzung in Form einer wäßrigen Dispersion, enthaltend
(1) in bekannter Weise dispergiertes Polyethylenwachs mit einer Dichte bei 20°C von mindestens 0,91 g/cm³, einer Säurezahl von mindestens 5 und einer Verseifungszahl von mindestens 10,
(2) Polyorganosiloxane mit Stickstoff-enthaltenden Gruppen in dispergierter Form, bei welchen der Stickstoff im Durchschnitt zumindest zu 25 %, bezogen auf die Gesamtzahl der Stickstoff-enthaltenden Gruppen, in Form von Amidogruppen und der Rest in Form von primären und sekundären Arninogruppen vorliegt und
(3) gegebenenfalls bekannte Weichmachungsmittel in dispergierter oder gelöster Form.

2. Zusammensetzung nach Patentanspruch 1, dadurch gekennzeichnet, daß als Bestandteil (1) Polyethylenwachse (= emulgierbare Polyethylene) mit einer Dichte von 0,95 bis 1,05 g/cm³, einer Säurezahl von 10 bis 60 und einer Verseifungszahl von 15 bis 80 in dispergierter Form enthalten sind.

3. Zusammensetzung nach Patentanspruch 1 oder 2, dadurch gekennzeichnet, daß als Polyorganosiloxane mit Stickstoff-enthaltenden Gruppen im Bestandteil (2) Polydialkylsiloxane enthalten sind, deren Stickstoff-enthaltende Gruppen der Formel 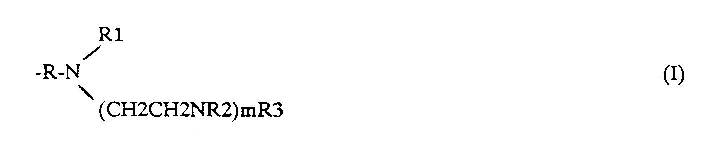 entsprechen, worin m = 0 oder 1 ist, R einen zweiwertigen Kohlenwasserstoffrest mit 2 bis 10 Kohlenstoffatomen, der auch durch eine Sauerstoffbrücke unterbrochen sein kann, bevorzugt einen Kohlenwasserstoffrest mit 3 oder 4 Kohlenstoffatomen bedeutet und worin R1 gleich Wasserstoff, ein Alkylrest mit 1 bis 4 Kohlenstoffatomen oder der Rest -COR4, R2 gleich Wasserstoff, ein Alkylrest mit 1 bis 4 Kohlenstoffatomen oder der Rest -COR4, R3 gleich Wasserstoff oder ein Alkylrest mit 1 bis 4 Kohlenstoffatomen und R4 ein, ggfs.substituierter, Alkylrest mit 1 bis 4 Kohlenstoffatomen ist, mit der Maßgabe, daß R1 und R2 in der Summe im Durchschnitt zumindest zu 25 % den Rest -COR4 bedeuten.

4. Zusammensetzung nach Patentanspruch 3, dadurch gekennzeichnet, daß als Polyorganosiloxane mit Stickstoff-enthaltenden Gruppen im Bestandteil (2) Polydialkylsiloxane enthalten sind, in welchen die Reste R1 und R2 in der Summe im Durchschnitt zu 50 bis 100 % dem Rest -COR4 entsprechen.

5. Zusammensetzung nach Patentanspruch 3 oder 4, dadurch gekennzeichnet, daß entweder alle vorhandenen Reste R4 oder ein Teil davon lineare oder verzweigte Alkylreste sind, welche eine Hydroxylgruppe als Substituenten aufweisen.

6. Zusammensetzung nach Patentanspruch 5, dadurch gekennzeichnet, daß alle oder ein Teil der Reste R4 lineare Alkylreste mit einer end-(ω-)ständigen Hydroxylgruppe sind.

7. Zusammensetzung nach einem oder mehreren der Patentansprüche 1 bis 6, dadurch gekennzeichnet, daß der Bestandteil (1) zu 5 bis 95 Gew.% (in Form einer 20 bis 35 %igen Polyethylenwachs-Dispersion) und der Bestandteil (2) zu 95 bis 5 Gew.% (in Form einer 10 bis 20 %igen Dispersion eines Polyorganosiloxans mit Stickstoff-enthaltenden Gruppen), und ggf. ein Weichmachungsmittel enthalten sind, wobei die Summe dieser Bestandteile 100 Gew.% ausmacht.

8. Zusammensetzung nach Patentanspruch 7, dadurch gekennzeichnet, daß von dem Bestandteil (1) 55 bis 90 Gew.%, von dem Bestandteil (2) 10 bis 45 Gew.% und von dem Bestandteil (3) 0 bis 30 Gew.% (in Form einer 20 bis 30 %igen Weichmachungsmittel enthaltenden Dispersion bzw. Lösung) enthalten sind, wobei die Summe dieser Bestandteile 100 Gew.% ausmacht.

9. Zusammensetzung nach einem oder mehreren der Patentansprüche 1 bis 8, dadurch gekennzeichnet, daß der Bestandteil (1) unter Verwendung von nichtionogenen Emulgatoren, insbesondere von ethoxylierten Alkylphenolen und/oder von ethoxylierten verzweigtkettigen Alkoholen hergestellt worden ist, wobei die Emulgatoren in Mengen von 20 bis 35 Gew.%, bezogen auf das Polyethylenwachs, eingesetzt worden sind.

10. Zusammensetzung nach einem oder mehreren der Patentansprüche 1 bis 9, dadurch gekennzeichnet, daß der Bestandteil (2) unter Verwendung von nichtionogenen Emulgatoren, insbesondere von Sekundäralkoholethoxylaten, Ethoxylaten von verzweigtkettigen Alkoholen und/oder Alkylphenolethoxylaten hergestellt worden ist, wobei die Emulgatoren in Mengen von 10 bis 80 Gew.%, bezogen auf das Polysiloxan, eingesetzt worden sind.

11. Zusammensetzung nach einem oder mehreren der Patentansprüche 1 bis 10, dadurch gekennzeichnet, daß als Bestandteil (3) hydrophilisierend wirkende Polyorganosiloxane und/oder Paraffine in dispergierter oder gelöster Form enthalten sind.

12. Verfahren zur weichmachenden Behandlung von Fasermaterialien, insbesondere Textilmaterial, wobei die Materialien in üblicher Weise mit einer Zusammensetzung in Form einer wäßrigen Dispersion behandelt und dann die Materialien in bekannter Weise durch Trocknen und gegebenenfalls Erhitzen fertiggestellt werden, dadurch gekennzeichnet, daß eine Zusammensetzung gemäß einem oder mehreren der Patentansprüche 1 bis 11 verwendet wird.

13. Verfahren nach Patentanspruch 12, dadurch gekennzeichnet, daß als Bestandteil (1) Polyethylenwachse (= emulgierbare Polyethylene) mit einer Dichte von 0,95 bis 1,05 g/cm³, einer Säurezahl von 10 bis 60 und einer Verseifungszahl von 15 bis 80 in dispergierter Form und
als Bestandteil (2) Polyorganosiloxane mit Stickstoff-enthaltenden Gruppen in dispergierter Form eingesetzt werden, deren Stickstoff-enthaltende Gruppen der Formel 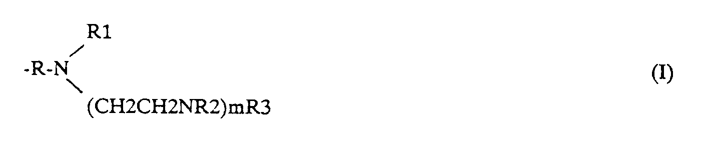 entsprechen, worin m = 0 oder 1 ist, R einen zweiwertigen Kohlenwasserstoffrest mit 2 bis 10 Kohlenstoffatomen, der auch durch eine Sauerstoffbrücke unterbrochen sein kann, bevorzugt einen Kohlenwasserstoffrest mit 3 oder 4 Kohlenstoffatomen bedeutet und worin R1 gleich Wasserstoff, ein Alkylrest mit 1 bis 4 Kohlenstoffatomen oder der Rest -COR4, R2 gleich Wasserstoff, ein Alkylrest mit 1 bis 4 Kohlenstoffatomen oder der Rest-COR4, R3 gleich Wasserstoff oder ein Alkylrest mit 1 bis 4 Kohlenstoffatomen und R4 ein, ggfs. substituierter, Alkylrest mit 1 bis 4 Kohlenstoffatomen ist, mit der Maßgabe, daß R1 und R2 in der Summe im Durchschnitt zumindest zu 25 %den Rest -COR4 bedeuten.

14. Verfahren nach Patentanspruch 13, dadurch gekennzeichnet, daß als Bestandteil (2) Polyorganosiloxane eingesetzt werden, in denen entweder alle vorhandenen Reste R4 oder ein Teil davon lineare oder verzweigte Alkylreste sind, welche eine Hydroxylgruppe als Substituenten aufweisen.

15. Verfahren nach Patentanspruch 14, dadurch gekennzeichnet, daß alle oder ein Teil der Reste R4 lineare Alkylreste mit einer end-(ω-)ständigen Hydroxylgruppe sind.

16. Verfahren nach einem oder mehreren der Patentansprüche 12 bis 15, dadurch gekennzeichnet, daß übliche Textilhilfsmittel, vor allem Schiebefestmittel, Antistatika und/oder Zellulosevernetzer mitverwendet werden.

## Claims

1. Composition in the form of an aqueous dispersion, containing
(1) a polyethylene wax dispersed in a known manner and having a density at 20°C of at least 0.91 g/cm³, an acid number of at least 5 and a saponification number of at least 10,
(2) polyorganosiloxanes in dispersed form having nitrogen-containing groups, in which on average at least 25 % of the nitrogen, based on the total number of nitrogen-containing groups, is present in the form of amido groups and the remainder in the form of primary and secondary amino groups, and
(3) if desired known softeners in dispersed or dissolved form.

2. Composition according to Patent Claim 1, characterized in that polyethylene waxes (= emulsifiable polyethylenes) having a density of 0.95 to 1.05 g/cm³, an acid number of 10 to 60 and a saponification number of 15 to 80 are present in dispersed form as component (1).

3. Composition according to Patent Claim 1 or 2, characterized in that the polyorganosiloxanes having nitrogen-containing groups and being present in component (2) are polydialkylsiloxanes whose nitrogen-containing groups have the formula 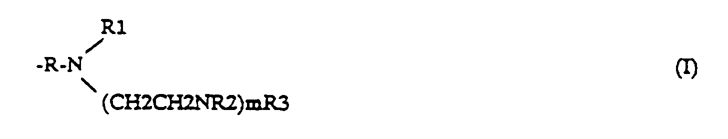 in which m is 0 or 1, R denotes a divalent hydrocarbon radical having 2 to 10 carbon atoms, which may be interrupted by an oxygen bridge, preferably a hydrocarbon radical having 3 or 4 carbon atoms, and in which R1 is hydrogen, an alkyl radical having 1 to 4 carbon atoms or the radical -COR4, R2 is hydrogen, an alkyl radical having 1 to 4 carbon atoms or the radical -COR4, R3 is hydrogen or an alkyl radical having 1 to 4 carbon atoms, and R4 is a substituted or unsubstituted alkyl radical having 1 to 4 carbon atoms, with the proviso that on average at least 25 % of the sum of R1 and R2 denotes the radical -COR4.

4. Composition according to Patent Claim 3, characterized in that the polyorganosiloxanes having nitrogen-containing groups and being present in component (2) are polydialkylsiloxanes in which on average 50 to 100 % of the sum of the radicals R1 and R2 represent the radical -COR4.

5. Composition according to Patent Claim 3 or 4, characterized in that either all radicals R4 present or a portion thereof are linear or branched alkyl radicals having a hydroxy group as substituent.

6. Composition according to Patent Claim 5, characterized in that all or a portion of the radicals R4 are linear alkyl radicals having a terminal (ω-)hydroxyl group.

7. Composition according to one or more of Patent Claims 1 to 6, characterized in that component (1) is present in an amount of 5 to 95 % by weight (in the form of a 20 to 35 % strength polyethylene wax dispersion) and component (2) is present in an amount of 95 to 5 % by weight (in the form of a 10 to 20 % strength dispersion of a polyorganosiloxane having nitrogen-containing groups), and, if desired, a softener is present, the sum of these components amounting to 100 % by weight.

8. Composition according to Patent Claim 7, characterized in that component (1) is present in an amount of 55 to 90 % by weight, component (2) is present in an amount of 10 to 45 % by weight, and component (3) is present in an amount of 0 to 30 % by weight (in the form of a 20 to 30 % strength softener-containing dispersion or solution), the sum of these components amounting to 100 % by weight.

9. Composition according to one or more of Patent Claims 1 to 8, characterized in that component (1) has been prepared using nonionic emulsifiers, in particular ethoxylated alkylphenols and/or ethoxylated branched alcohols, the emulsifiers having been used in amounts of 20 to 35 % by weight, based on the polyethylene wax.

10. Composition according to one or more of Patent Claims 1 to 9, characterized in that component (2) has been prepared using nonionic emulsifiers, in particular secondary alcohol ethoxylates, ethoxylates of branched alcohols, and/or alkylphenol ethoxylates, the emulsifiers having been used in amounts of 10 to 80 % by weight, relative to the polysiloxane.

11. Composition according to one or more of Patent Claims 1 to 10, characterized in that component (3) comprises hydrophilicizing polyorganosiloxanes and/or paraffins in dispersed or dissolved form.

12. Process for the treatment of fibre materials, in particular textile material, with softening agents, in which the materials are treated in the usual manner with a composition in the form of an aqueous dispersion and the materials are then finished in a known manner by drying and, if desired, heating, characterized in that a composition according to one or more of Patent Claims 1 to 11 is used.

13. Process according to Patent Claim 12, characterized in that polyethylene waxes (= emulsifiable polyethylenes) having a density of 0.95 to 1.05 g/cm³, an acid number of 10 to 60 and a saponification number of 15 to 80 are used in dispersed form as component (1)
and
polyorganosiloxanes having nitrogen-containing groups whose nitrogen-containing groups have the formula 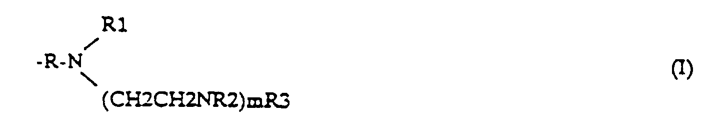 in which m is 0 or 1, R denotes a divalent hydrocarbon radical having 2 to 10 carbon atoms, which may be interrupted by an oxygen bridge, preferably a hydrocarbon radical having 3 or 4 carbon atoms, and in which R1 is hydrogen, an alkyl radical having 1 to 4 carbon atoms or the radical -COR4, R2 is hydrogen, an alkyl radical having 1 to 4 carbon atoms or the radical -COR4, R3 is hydrogen or an alkyl radical having 1 to 4 carbon atoms, and R4 is a substituted or unsubstituted alkyl radical having 1 to 4 carbon atoms, with the proviso that on average at least 25 % of the sum of R1 and R2 denotes the radical -COR4, are used in dispersed form as component (2).

14. Process according to Patent Claim 13, characterized in that polyorganosiloxanes in which either all radicals R4 present or a portion thereof are linear or branched alkyl radicals containing a hydroxy group as substituent are used as component (2).

15. Process according to Patent Claim 14, characterized in that all or a portion of the radicals R4 are linear alkyl radicals having a terminal (ω-)hydroxyl group.

16. Process according to one or more of Patent Claims 12 to 15, characterized in that customary textile auxiliaries, in particular anti-slip agents, antistats and/or cellulose-crosslinking agents are additionally used.

## Revendications

1. Composition sous forme d'une dispersion aqueuse, contenant:
1) Une cire de polyéthylène, dispersée de façon connue et ayant à 20°C une masse volumique au minimum égale à 0,91 g/cm³, un indice d'acide valant au moins 5 et un indice de saponification valant au moins 10,
2) des polyorganosiloxanes comportant des groupes contenant de l'azote sous forme dispersée, dans lesquels l'azote est présent en une proportion moyenne valant au moins 25%, par rapport au nombre total des groupes contenant de l'azote, sous forme de groupes amido et le reste sous forme de groupes amino primaires et secondaires, et
3) éventuellement des agents adoucissants connus, présent sous forme dispersée ou dissoute.

2. Composition selon la revendication l, caractérisée en ce que sont présentes sous forme dispersée, à titre de constituant (l), des cires de polyéthylène (=polyéthylènes émulsifiables) ayant une masse volumique de 0,95 à 1,05 g/cm³, un indice d'acide de 10 à 60 et un indice de saponification de 15 à 80.

3. Composition selon la revendication l ou 2, caractérisée en ce que sont contenus dans le constituant (2), en tant que polyorganosiloxanes comportant des groupes contenant de l'azote, des polydialkylsiloxanes dont les groupes contenant de l'azote correspondent à la formule: 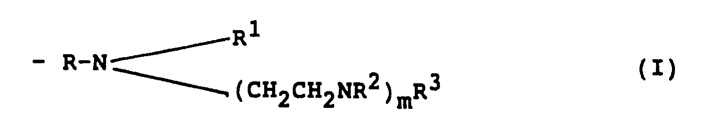 formule dans laquelle m vaut 0 ou 1; R représente un reste hydrocarboné divalent comportant 2 à 10 atomes de carbone, pouvant aussi être interrompu par un pont d'oxygène, de préférence un reste hydrocarboné comportant 3 ou 4 atomes de carbone; et R¹ représente un atome d'hydrogène, un reste alkyle ayant 1 à 4 atomes de carbone ou le reste -COR⁴; R² représente un atome d'hydrogène, un reste alkyle ayant 1 à 4 atomes de carbone ou le reste -COR⁴; R³ représente un atome d'hydrogène ou un reste alkyle ayant l à 4 atomes de carbone; et R⁴ représente un reste alkyle éventuellement substitué comportant l à 4 atomes de carbone, à la condition qu'en valeur moyenne au moins 25% de la somme de R¹ et de R² représente des restes-COR⁴.

4. Composition selon la revendication 3, caractérisée en ce que son contenu dans le constituant (2), à titre de polyorganosiloxanes contenant des groupes comportant de l'azote, est formé de polydialkylsiloxanes dans lesquels les restes R¹ et R² sont constitués en somme moyenne de 50 à 100% de restes -COR⁴.

5. Composition selon la revendication 3 ou 4, caractérisée en ce que tous les restes R⁴ ou une partie de ces restes sont des restes alkyles linéaires ou ramifiés qui portent un groupe hydroxyle comme substituant.

6. Composition selon la revendication 5, caractérisée en ce que tous les restes R⁴ ou une partie des restes R⁴ sont des restes alkyles linéaires comportant un groupe hydroxyle terminal (en position ω).

7. Composition selon une ou plusieurs des revendications l à 6, caractérisée en ce que le constituant (1) est présent en une proportion de 5 à 95% en poids (sous forme d'une dispersion comportant 20 à 35% de cire de polyéthylène) et le constituant (2) est présent en une proportion de 95 à 5% en poids (sous forme d'une dispersion à 10 à 20% d'un polyorganosiloxane comportant des groupes contenant de l'azote) et il y a éventuellement aussi un agent adoucissant, la somme de ces constituants formant un pourcentage de 100% en poids.

8. Composition selon la revendication 7, caractérisée en ce qu'elle contient 55 à 90% en poids de constituant (l), 10 à 45% en poids de constituant (2) et 0 à 30% en poids de constituant (3) (sous forme d'une dispersion ou solution contenant 20 à 30% d'agent adoucissant), la somme de ces constituants formant 100% en poids.

9. Composition selon une ou plusieurs des revendications l à 8, caractérisée en ce que le constituant (l) a été préparé avec utilisation d'émulsifiants non ionogènes, en particulier des alkylphénols éthoxylés et/ou des alcools ramifiés éthoxylés, les émulsifiants ayant été utilisés en des quantités de 20 à 35% en poids, par rapport à la cire de polyéthylène.

10. Composition selon une ou plusieurs des revendications l à 9, caractérisé en ce que le constituant (2) a été préparé avec utilisation d'émulsifiants non ionogènes, en particulier d'éthoxylats d'alcools secondaires, d'éthoxylats d'alcools ramifiés et/ou d'éthoxylats d'alkylphénols, les émulsifiants ayant été utilisés en des quantités représentant de 10 à 80% en poids, par rapport au polysiloxane.

11. Composition selon une ou plusieurs des revendications l à 10, caractérisée en ce qu'elle contient comme constituant (3) des polyorganosiloxanes à action hydrophilisante et/ou des paraffines, présentes sous forme dispersée ou dissoute.

12. Procédé pour réaliser un traitement d'assouplissement de matières fibreuses, en particulier de la matière textile, selon lequel les matières sont traitées de façon usuelle par une composition sous forme d'une dispersion aqueuse, puis les matières sont terminées de façon connue par séchage et éventuellement chauffage, procédé caractérisé en ce qu'on utilise une composition selon une ou plusieurs des revendications 1 à 11.

13. Procédé selon la revendication 12, caractérisé en ce qu'on utilise comme constituant (l) des cires de polyéthylène (=polyéthylène émulsifiables) ayant une masse volumique de 0,95 à 1,05 g/cm³, un indice d'acide de 10 à 60 et un indice de saponification de 15 à 80, sous forme dispersée et, comme constituant (2), des polyorganosiloxanes ayant des groupes contenant de l'azote, sous forme dispersée, dont les groupes contenant de l'azote répondent à la formule 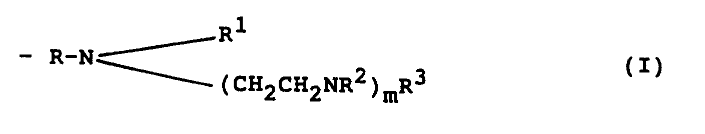 dans laquelle m vaut 0 ou 1. R représente un reste d'hydrocarbure divalent comportant 2 à 10 atomes de carbone, qui peut aussi être interrompu par un pont d'oxygène, de préférence un reste hydrocarboné comportant 3 ou 4 atomes de carbone; R¹ représente un atome d'hydrogène, un reste alkyle ayant l à 4 atomes de carbone ou le reste -COR⁴; R² représente un atome d'hydrogène, un reste alkyle ayant l à 4 atomes de carbone, ou le reste -COR⁴; R³ représente un atome d'hydrogène ou un reste alkyle ayant 1 à 4 atomes de carbone; et R⁴ représente un reste alkyle, éventuellement substitué comportant 1 à 4 atomes de carbone, à la condition qu'en valeur moyenne au moins 25% de la somme de R¹ et de R² représente des restes-COR⁴.

14. Procédé selon la revendication 13, caractérisé en ce qu'on utilise comme constituant (2) des polyorganosiloxanes dans lesquels tous les restes R⁴ ou une partie de ces restes R⁴ sont des restes alkyles linéaires ou ramifiés, qui présentent un groupe hydroxyle comme substituant.

15. Procédé selon la revendication 14, caractérisé en ce que tous les restes R⁴ ou une partie des restes R⁴ sont des restes alkyles linéaires comportant un groupe hydroxyle terminal (en position ω).

16. Procédé selon une ou plusieurs des revendications 12 à 15, caractérisé en ce qu'on utilise également des adjuvants usuels pour des textiles, surtout des produits antiglissement, des produits anti(électricité)statique et/ou des agents de réticulation de la cellulose.
